Europäisches Patentamt

European Patent Office

Office européen des brevets

(11) Veröffentlichungsnummer: **0 340 838**
A2

## (12) EUROPÄISCHE PATENTANMELDUNG

(21) Anmeldenummer: 89201045.5

(22) Anmeldetag: 22.04.89

(51) Int. Cl.4: **F16C 33/20**

(30) Priorität: 05.05.88 DE 3815265

(43) Veröffentlichungstag der Anmeldung:
08.11.89 Patentblatt 89/45

(84) Benannte Vertragsstaaten:
**AT DE ES FR GB IT SE**

(71) Anmelder: **KOLBENSCHMIDT**
**Aktiengesellschaft**
**Karl-Schmidt-Strasse 8/12 Postfach 1351**
**D-7107 Neckarsulm(DE)**

(72) Erfinder: **Matucha, Karl-Heinz, Dr.**
**Achimweg 2**
**D-6233 Kelkheim(DE)**
Erfinder: **Steffens, Thomas, Dr.**
**Bieberer Strasse 133**
**D-6050 Offenbach(DE)**
Erfinder: **Baureis, Hans-Paul**
**Höhenweg 5**
**D-6909 Dielheim-Horrenberg(DE)**
Erfinder: **Bickle, Wolfgang**
**Friedensstrasse 15**
**D-6831 Reilingen(DE)**
Erfinder: **Braus, Jürgen, Dr.**
**Johann-Jakob-Astor-Strasse 53**
**D-6909 Walldorf(DE)**

(74) Vertreter: **Rieger, Harald, Dr. et al**
**Reuterweg 14**
**D-6000 Frankfurt a.M.(DE)**

(54) **Werkstoff für Verbundlager und Verfahren zu seiner Herstellung.**

(57) Ein Werkstoff für Verbundlager mit Kunststoff-Gleitschicht besteht aus einer metallischen Stützschicht und einer mit dieser verbundenen Gleitschicht aus eine Matrix bildendem fluorhaltigem Polymerem, in dein eine hohe Affinität zu Fluor besitzendes Metallpulver feindispergiert ist. Zur Erhöhung des Reibmoments und der Verschleißrate enthält das fluorhaltige Polymere Metallfluorid sowie Metalloxifluorid und besteht aus monoklin kristallisierten PVDF, amorphem PVDF sowie einem neuartigen Polymeren, das in einem mittels CuKα-Strahlung erstellten Röntgendiffraktogramm ein scharfes Intensitätsmaximum bei einem doppelten Braggwinkel von $2\theta = 18{,}07 \pm 0{,}03°$ sowie einen Schmelzbereich von 320 bis 350 °C besitzt und frei von ortho-rhombisch kristallisiertem PVDF ist.

## Fig. 2

## Werkstoff für Verbundlager und Verfahren zu seiner Herstellung

Die Erfindung betrifft einen Werkstoff für Verbundlager mit Kunststoff-Gleitschicht, der aus einer metallischen Stützschicht, vorzugsweise aus Stahl, Bronze oder einer hochfesten Aluminiumlegierung, und einer damit verbundenen 30 bis 500 μm, vorzugsweise 50 bis 250 μm dicken Gleitschicht aus eine Matrix bildendem fluorhaltigem Polymeren besteht, in dem 5 bis 50 Masse-%, vorzugsweise 30 bis 40 Masse-% eine hohe Affinität zu Fluor besitzendes Metallpulver mit einer Korngröße von ≤ 40 μm feindispergiert sind, sowie ein Verfahren zur Herstellung des Werkstoffs für Verbundlager.

Aus der EP-PS 0 044 577 und der DE-PS 29 28 061 ist ein Werkstoff für Verbundlager mit Kunststoff-Gleitschicht bekannt, der aus einer metallischen Stützschicht, vorzugsweise Stahlstützschicht, mit einer darauf befindlichen 30 bis 500 μm dicken Gleitschicht aus die Matrix bildendem fluorhaltigem Polymerem, d.h. Polyvinylidenfluorid (PVDF), mit 5 bis 50 Vol.-% Bleiteilchen mit einer Korngröße von ≤ 50 μm besteht, und die das Gleitverhalten verbessernde Stoffe wie PTFE, MoS$_2$, Graphit als Einlagerungen in feindisperser Form enthalten kann. Die Kunststoff-Gleitschicht ist in vorteilhafter Weise auf eine auf der Stützschicht porös aufgesinterten oder aufgespritzten Rauhschicht mit einer Dicke von 250 bis 350 μm aus gute Gleiteigenschaften aufweisendem metallischem Werkstoff, vorzugsweise Bronze, aufgetragen, wobei das Lückenvolumen der Rauhschicht mit dem Kunststoff der Gleitschicht ausgefüllt ist.

Die aus diesem Verbundlagerwerkstoff hergestellten Lagerkörper haben einen breiten Einsatzbereich gefunden, können jedoch in nachteiliger Weise sehr hohe mechanische Belastungen, wie sie beispielsweise in Lagerungen von Hydraulikmotoren auftreten, nicht ertragen, d.h. ihre Lebensdauer ist unzulässig gering, so daß die Standzeit der Maschine begrenzt wird. Daraus resultiert die Forderung nach Verbundlagerwerkstoffen mit vergleichsweise größerer mechanischer Belastbarkeit, größerem Verschleißwiderstand und möglichst kleiner Reibung.

Es ist deshalb die Aufgabe vorliegender Erfindung, einen gegenüber dem eingangs beschriebenen Verbundlagerwerkstoff bezüglich Verschleißraten und Lebensdauer verbesserten Verbundlagerwerkstoff bereitzustellen.

Die Lösung dieser Aufgabe besteht darin, daß das fluorhaltige Polymere 0,5 bis 5,0 Masse-% Metallfluorid sowie 0,5 bis 5,0 Masse-% Metalloxifluorid enthält und aus 10 bis 25 Masse-% monoklin kristallisiertem PVDF, 10 bis 40 Masse-% amorphem PVDF sowie 10 bis 30 Masse-% eines neuartigen Polymers, das in einem mittels CuKα-Strahlung erstellten Röntgendiffraktogramm ein scharfes Intensitätsmaximum bei einem doppelten Braggwinkel von $2\theta$ = 18,07 ± 0,03° sowie einen Schmelzbereich von 320 bis 350°C besitzt, besteht und frei von ortho-rhombisch kristallisiertem PVDF ist.

Als Metallpulver, die eine besonders hohe Affinität zu Fluor besitzen, kommen für den vorliegenden Verwendungszweck insbesondere solche von Blei, Zinn, Zink, Indium, Thallium, Kadmium, Wismut, Barium, Kupfer, Silber und deren Legierungen einzeln oder zu mehreren in Betracht, wobei auch Lagermetalle auf Blei- und Zinn-Basis mitumfaßt sind.

Der erfindungsgemäß aufgebaute Verbundlagerwerkstoff zeichnet sich durch vergleichsweise geringe Verschleißraten und eine hohe Ermüdungsfestigkeit aus, der eine einwandfreie Funktion der daraus hergestellten Lagerkörper auch noch nach sehr langen Laufzeiten gewährleistet. Die Matrix kann zur Verbesserung der Gleiteigenschaften sowie zur Stabilisierung noch 1 bis 20 Masse-%, vorzugsweise 5 bis 15 Masse-% feindispergierte Pulverteilchen, bestehend aus PTFE, MoS$_2$, Graphit, ZnS, BaSO$_4$ einzeln oder zu mehreren enthalten, wobei die Korngröße dieser Pulverteilchen zweckmäßigerweise in Anpassung an die Metallpulverteilchen ≤ 40 μm ist.

Im Rahmen der vorzugsweisen Ausgestaltung des erfindungsgemäßen Verbundlagerwerkstoffs sind in der 15 bis 20 Masse-% monoklines PVDF enthaltenden Matrix aus neuartigem Polymerem noch 15 bis 25 Masse-% amorphes PVDF, 1 bis 3 Masse-% Bleifluorid, 1 bis 3 Masse-% Bleioxifluorid und 5 bis 25 Masse-% Blei sowie ggf. noch 3 bis 10 Masse-% PTFE eingelagert.

Eine bevorzugte Ausführungsform der Matrix besteht in der Zusammensetzung 25 Masse-% neuartiges fluorhaltiges Polymeres, 25 Masse-% amorphes PVDF, 10 Masse-% monokolin kristallisiertes PVDF, 25 Masse-% Blei, 3 Masse-% PbF$_2$, 2 Masse-% PbOF$_2$, 10 Masse-% PTFE.

In einer weiteren Zusammensetzung kann die Matrix aus 30 Masse-% neuartigem fluorhaltigem Polymeren, 15 Masse-% monoklin kristallisiertem PVDF, 20 Masse-% amorphem PVDF, 10 Masse-% PTFE, 2,5 Masse-% PbF$_2$, 2,5 Masse-% PbOF$_2$, 20 Masse-% Blei bestehen.

Die erfindungsgemäß aufgebaute Matrix ist unmittelbar mit der mechanisch oder chemisch aufgerauhten Oberfläche der metallischen Stützschicht verbunden. Es besteht aber auch die Möglichkeit, die Matrix über eine Zwischenschicht aus porös aufgesintertem metallischen Gleitwerkstoff, vorzugsweise Bronze, mit der Stützschicht zu verbinden, wobei die Gleitschichtmasse das Lückenvolumen ausfüllt und ber den Spitzen der Zwischenschicht eine Gleitschicht von 10 bis 350 μm Dicke vorhanden ist.

Bei dem Verfahren zur Herstellung des Verbundlagerwerkstoffs wird ein Gemisch aus 30 bis 80 Masse-% fluorhaltigem Polymeren und 5 bis 50 Masse-% eine hohe Affinität zu Fluor besitzendes Metallpulver auf eine metallische Stützschicht aufgetragen, aufgewalzt und auf eine Temperatur von >290 °C, vorzugsweise 300 bis 340 °C, erwärmt, bei dieser Temperatur 0,5 bis 3,5 min, vorzugsweise 1,0 bis 2,0 min gehalten und dann in einer Zeit von 0,5 bis 10 min, vorzugsweise 4 min auf 100 °C kontinuierlich abgekühlt. Die Herstellung des Verbundlagerwerkstoffs kann sowohl auf kontinuierliche Weise, indem eine bandförmige Stützschicht fortlaufend beschichtet wird, als auch in diskontinuierlicher Weise, indem streifenförmige Abschnitte einzeln beschichtet werden, erfolgen.

Nach einem besonderen Verfahrensmerkmal erfolgt nach Erreichen einer Temperatur von ca. 180 °C eine kontinuierliche Abkühlung auf eine Temperatur von 120 bis 115 °C mit einer Geschwindigkeit von ca. 50 °C/min.

Im folgenden ist die Erfindung anhand eines Ausführungsbeispiels sowie von Zeichnungen näher erläutert. Es zeigen:

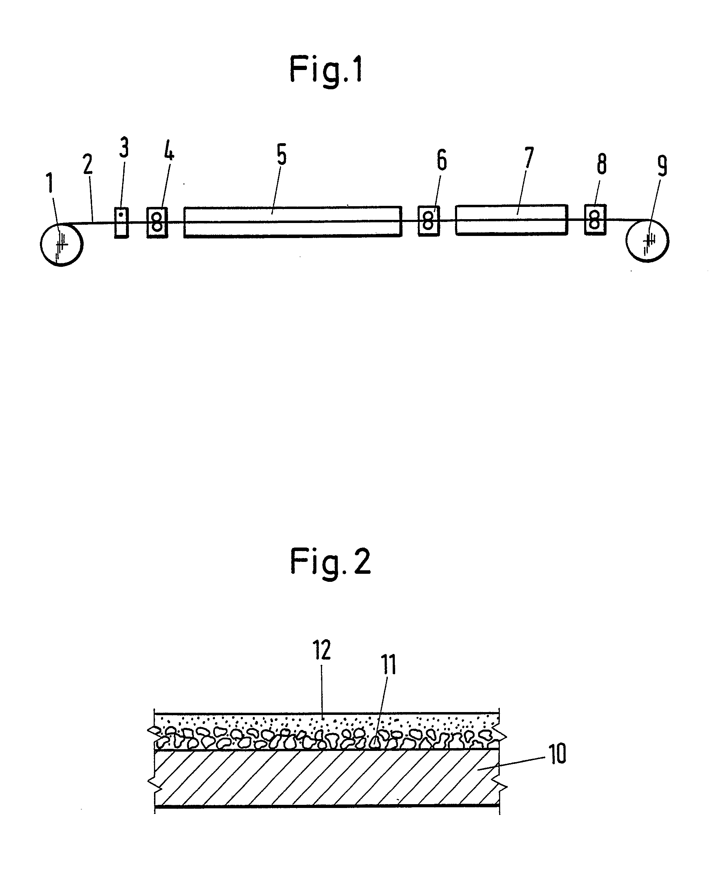

Fig. 1 eine schematische Darstellung der Vorrichtung zur Durchführung des Verfahrens und Herstellung des Verbundlagerwerkstoffs und

Fig. 2 einen Schnitt durch den Verbundlagerwerkstoff.

Das auf dem Haspel (1) aufgewickelte Band (2), das aus dem als Stützschicht dienenden Stahlband (10) und der darauf aus Bleibronze porös gesinterten Rauhgrundschicht (11) besteht, wird kontinuierlich von dem Haspel (1) abgewickelt und rauhgrundseitig aus einem mit einem Rührwerk ausgestatteten Behälter (3) mit einer Pulvermischung aus 60 Masse-% PVDF, 25 Masse-% Blei und 15 Masse-% PTFE gleichmäßig beschichtet. Nachdem das Band (2) das Walzgerüst (4) durchlaufen hat, in dem die offenen Poren des Rauhgrundes (11) so mit der Pulvermischung ausgefüllt sind, daß über den Spitzen des Rauhgrundes (11) eine Gleitschicht (12) vorhanden ist, wird das beschichtete Band (2) durch den Durchlaufofen (5) geführt und auf 320 °C für die Dauer von 1,5 min erwärmt. Dabei wird das PVDF so aufgeschmolzen, daß neben einem fluorhaltigem Polymeren, das durch ein in einem mittels CuKα-Strahlung erstellten Röntgendiffraktogramm bei einem doppelten Braggwinkel von $2\theta = 18,07 \pm 0,03°$ liegendes Intensitätsmaximum sowie einen Schmelzbereich von 320 bis 350 °C charakterisiert ist, noch 15 Masse-% monoklin kristallisiertes PVDF, 24 Masse-% amorphes PVDF, 21 Masse-% Blei, 15 Masse-% PTFE, 3,5 Masse-% Bleifluorid sowie 3,5 Masse-% Bleioxifluorid vorhanden sind. Nach dem Austritt aus dem Ofen (5) wird das fluorhaltige Polymere in dem Walzgerüst (6) nachverdichtet sowie geglättet und anschließend in dem Durchlaufofen (7) innerhalb von 5 min kontinuierlich auf eine Temperatur von etwa 100 °C abgekühlt. In dem nachfolgenden Walzgerüst (8) wird der hergestellte Verbundlagerwerkstoff kalibriert und schließlich auf den Haspel (9) aufgewickelt. Aus dem bandförmigen Verbundlagerwerkstoff lassen sich ohne jede Nachbehandlung bzw. Nachbearbeitung ohne Schwierigkeiten Gleitlagerelemente, insbesondere Lagerbuchsen, Lagerschalen, Bundbuchsen sowie Anlaufscheiben, herstellen.

Um das tribologische Verhalten des erfindungsgemäß ausgebildeten Verbundlagerwerkstoffs darzustellen, ist nachfolgend ein Vergleichsversuch beschrieben, bei dem eine Lagerbuchse, gefertigt aus dem nach vorstehend beschriebenen Verfahrensmaßnahmen hergestellten Verbundlagerwerkstoff, mit einer Lagerbuchse, die aus einem Verbundlagerwerkstoff nach dem Stand der Technik gemäß der EP-PS 0 044 577 hergestellt ist und aus einer Stahlstützschicht mit einer darauf porös gesinterten Bronzeschicht, deren offene Poren bis über ihre Spitzen unter Ausbildung einer Gleitschicht mit einer gesinterten Mischung aus 50 Masse-% PVDF, 40 Masse-% Blei und 10 Masse-% PTFE gefüllt sind, besteht, bezüglich Reibmoment und Verschleiß verglichen wird.

Das Reibmoment und der Verschleiß wurden mit einer Prüfmaschine gemessen, bei der ein aus Stahl vom Typ C35 weich bestehender, eine Oberflächenrauhigkeit von $R_A = 0,2$ μm aufweisender und mit einer Gleitgeschwindigkeit von 0,3 m/s rotierender Lagerzapfen eine Prüflagerbuchse der Abmessung ⌀ 21 x ⌀ 22 x 15 mm mit einem Spiel von 0,03 min trägt. Die Prüflagerbuchse ist in einen als Pendel ausgebildeten und mit einer spezifischen Belastung von 3,3 N/mm² belasteten Lagerkörper eingepreßt. Das Reibmoment wird aus der Drehung der Prüflagerbuchse über den Ausschlag des als Pendel ausgebildeten Lagerkörpers ermittelt. Der Verschleiß wird jeweils nach einem Gleitweg von 8, 16, 32 und 48 km gemessen.

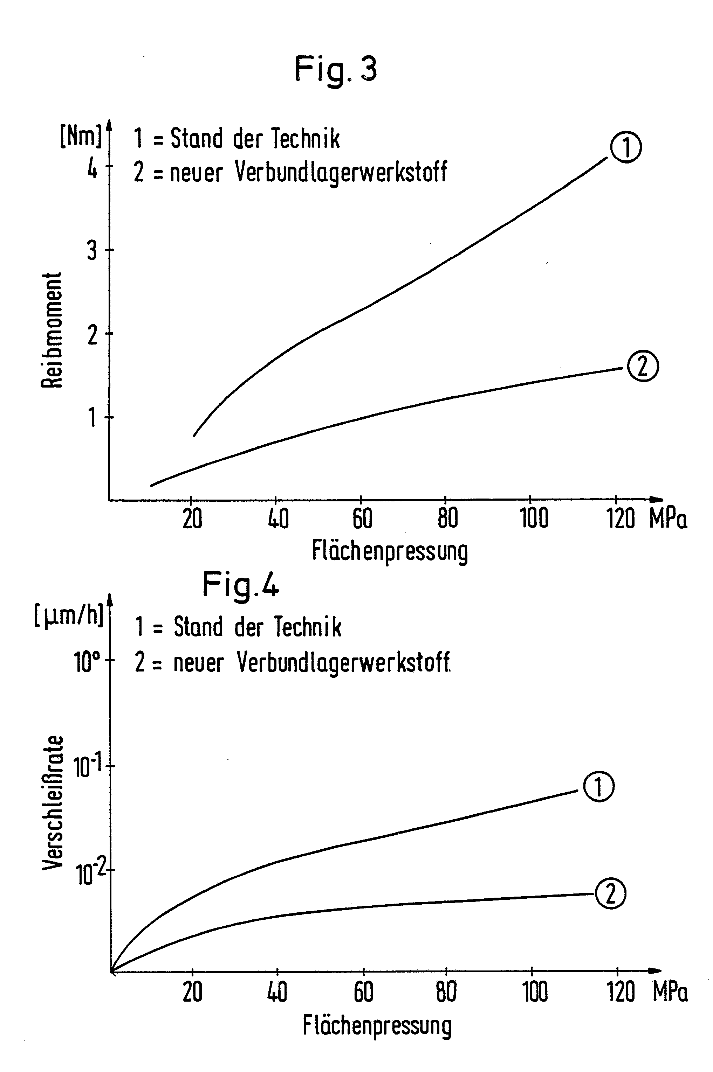

Die Versuchsergebnisse sind in Fig. 3 und Fig. 4 graphisch dargestellt und zeigen, daß die aus dem erfindungsgemäß aufgebauten Verbundlagerwerkstoff gefertigten Lagerbuchsen bezüglich Reibmoment (Nm) und Verschleißrate (μm/h) in Abhängigkeit von der Flächenpressung (MPa) deutlich denjenigen Lagerbuchsen, die aus dem Verbundlagerwerkstoff nach dein Stand der Technik bestehen, überlegen sind.

## Ansprüche

1. Werkstoff für Verbundlager mit Kunststoff-Gleitschicht, der aus einer metallischen Stützschicht, vorzugsweise aus Stahl, Bronze oder einer hochfesten Aluminiumlegierung, und einer mit dieser verbundenen 30 bis 500 μm, vorzugsweise 50 bis 250 μm dicken Gleitschicht aus eine Matrix bildendem fluorhaltigem Polymerem besteht, in dem 5 bis 50 Masse-%, vorzugsweise 30 bis 40 Masse-% eine hohe Affinität zu Fluor besitzendes Metallpulver mit einer Korngröße von ≤ 40 μm feindispergiert sind, dadurch gekennzeichnet, daß das fluorhaltige Polymere 0,5 bis 5,0 Masse-% Metallfluorid sowie 0,5 bis 5,0 Masse-% Metalloxifluorid enthält und aus 10 bis 25 Masse-% monoklin kristallisiertem PVDF, 10 bis 40 Masse-% amorphem PVDF sowie 10 bis 30 Masse-% eines neuartigen Polymers, das in einem mittels CuKα-Strahlung erstellten Röntgendiffraktogramm ein scharfes Intensitätsmaximum bei einem doppelten Braggwinkel von $2\theta = 18{,}07 \pm 0{,}03°$ sowie einen Schmelzbereich von 320 bis 350°C besitzt, besteht und frei von ortho-rhombisch kristallisiertem PVDF ist.

2. Werkstoff nach Anspruch 1, dadurch gekennzeichnet, daß als Metallpulver Blei, Zinn, Zink, Indium, Thallium, Kadmium, Wismut, Barium, Kupfer, Silber und deren Legierungen einzeln oder zu mehreren in dem fluorhaltigem Polymeren dispergiert ist.

3. Werkstoff nach den Ansprüchen 1 und 2, gekennzeichnet durch den Zusatz von 1 bis 20 Masse-%, vorzugsweise 5 bis 15 Masse-% feindispergierten Pulverteilchen mit einer Korngröße von ≤ 40 μm, bestehend aus PTFE, MoS$_2$, Graphit, ZnS, BaSO$_4$ und/oder Stearaten.

4. Werkstoff nach den Ansprüchen 1 bis 3, dadurch gekennzeichnet, daß die Kunststoffgleitschicht unmittelbar mit der mechanisch oder chemisch aufgerauhten Oberfläche der Stützschicht verbunden ist.

5. Werkstoff nach den Ansprüchen 1 bis 3, dadurch gekennzeichnet, daß die Kunststoff-Gleitschicht über eine porös auf der Stützschicht aufgesinterten oder aufgespritzten, aus einem metallischen Gleitwerkstoff bestehenden Schicht, vorzugsweise aus Bronze, mit der Stützschicht unter Ausfüllung der Poren und Ausbildung einer Deckschicht verbunden ist.

6. Verfahren zur Herstellung von Werkstoff für Verbundlager nach den Ansprüchen 1 bis 5, dadurch gekennzeichnet, daß ein Gemisch aus 30 bis 80 Masse-% fluorhaltigem Polymeren und 5 bis 50 Masse-% eine hohe Affinität zu Fluor besitzendes Metallpulver auf die metallische Stützschicht aufgetragen, aufgewalzt, auf eine Temperatur von >290°C, vorzugsweise 300 bis 340°C, erwärmt, bei dieser Temperatur 0,5 bis 3,5 min, vorzugsweise 1,0 bis 2,0 min gehalten und dann in einer Zeit von 0,5 bis 10 min, vorzugsweise 4 min auf 100°C kontinuierlich abgekühlt wird.

7. Verfahren nach Anspruch 6, dadurch gekennzeichnet, daß nach Erreichen einer Temperatur von ca. 180°C eine kontinuierliche Abkühlung auf eine Temperatur von 120 bis 115°C mit einer Geschwindigkeit von ca. 50°C/min erfolgt.

# Fig.1

# Fig.2

# Fig. 3

1 = Stand der Technik
2 = neuer Verbundlagerwerkstoff

[Nm] — Reibmoment — Flächenpressung — MPa

# Fig. 4

1 = Stand der Technik
2 = neuer Verbundlagerwerkstoff

[µm/h] — Verschleißrate — Flächenpressung — MPa